# EUROPEAN PATENT SPECIFICATION

(11) **EP 3 433 470 B1**
(45) Date of publication and mention of the grant of the patent: **12.08.2020**
(21) Application number: 17715371.5
(22) Date of filing: 24.03.2017
(51) Int. Cl.: F01D 17/16, F02B 37/24, F02C 6/12

(54) **VARIABLE GEOMETRY TURBOCHARGER**
TURBOLADER MIT VARIABLER GEOMETRIE
TURBOCOMPRESSEUR À GÉOMÉTRIE VARIABLE

(30) Priority: 24.03.2016 US 201615079299
(43) Date of publication of application: 30.01.2019
(73) Proprietor: BorgWarner Inc., Auburn Hills, MI 48326 (US)
(72) Inventor: WALLACE, Robert, Candler, North Carolina 28715 (US)
(74) Representative: Peterreins Schley
(86) International application number: PCT/US2017/024014
(87) International publication number: WO 2017/165768

(56) References cited:
- WO-A1-2013/072732
- WO-A2-2008/137410
- DE-T5-112014 001 084

## Description

### Technical Field

This disclosure generally relates to an engine system and, more particularly, relates to a variable geometry turbocharger for an engine system.

### Background

An engine system may include an engine, an exhaust conduit, a turbocharger and an inlet conduit. The turbocharger may include a turbine section fluidly coupled with the engine via the exhaust conduit and a compressor section fluidly coupled to the engine via the inlet conduit. The turbine section may be configured to extract work from an exhaust stream passing through the exhaust conduit. The turbocharger may also be configured to pass this work to the compressor section where the compressor section may be configured to conduct work on an inlet stream passing through the inlet conduit.

The turbine section may include a volute, a nozzle section fluidly downstream of the volute and a turbine wheel fluidly downstream of the nozzle section. Subsequently, the exhaust stream may enter the nozzle section where the exhaust stream speed is increased and directed to a turbine wheel. Finally, the exhaust stream may be passed by the turbine wheel where work is extracted from the exhaust stream.

Customarily, the nozzle section may include a first vane and a second vane positioned adjacent to the first vane to form a nozzle. In this design, the spacing and angle between the first vane and the second vane may be permanently set at a specific distance and angle thereby leading to lower torque than possible at low engine speeds, throttling issues as engine speed is increased and less efficient operation than is possible. To resolve these issues turbocharger designers have more recently utilized variable geometry turbochargers utilizing swing gate technology in the nozzle section. While swing gate technology may resolve the foregoing issues there is still room for improvement.

DE112014001084T5 relates to a variable nozzle unit and a variable capacity loader having a plurality of variable nozzles being disposed between a front surface of a first nozzle ring and a front surface of a second nozzle ring in a circumferential direction so as to surround a turbine impeller. When each variable nozzle rotates toward an end of one side of the opening direction in the rotating range, a rearward edge of each variable nozzle protrudes inwardly in a radial direction with respect to an inner edge of the front surface of the second nozzle ring.

WO2008/137410A2 discloses a turbocharger having a turbine wheel with a plurality of extended tips. A variable turbine geometry assembly is in fluid communication with the turbine wheel and has a nozzle ring with a plurality of vanes movably attached thereto. One or more of the extended tips are non-parallel with an edge of one or more of the plurality of vanes. The incidence angle can vary and can be from 1 to 60 degrees. The extended tips can extend into an inlet of the vane space housing the vanes.

WO2013/072732A1 relates to a circular ring-shaped shroud platem, which is arranged between a scroll passage and a turbine chamber. The shroud plate has a through-hole that penetrates therethrough in a direction along an axis of a turbine shaft. A variable nozzle is supported in an openable/closable manner on the shroud plate by a shaft inserted through the through-hole. A gap between the shroud plate and a turbine housing in the direction along the axis is partitioned into a first space that communicates with an outlet of exhaust gas that faces the through-hole and is provided upstream of a turbine wheel with respect 3to the flow of exhaust gas. A second space communicates with the scroll passage, by a disc spring that is so arranged as to surround the turbine wheel.

The present disclosure is directed to overcoming one or more problems set forth above and/or other problems associated with known swing gate turbocharger turbine sections.

### Summary

The present invention refers to a turbocharger turbine section as defined in claim 1. The dependent claims define preferred embodiments of the turbocharger turbine section.

These and other aspects and features of the present disclosure will be more readily understood when read in conjunction with the accompanying drawings.

### Brief Description

FIG. 1 is a block diagram of an exemplary engine system according to one aspect of the present disclosure.
FIG. 2 is a cross-sectional view of turbocharger manufactured in accordance with the present disclosure that may be utilized with the exemplary engine system according to FIG. 1.
FIG. 3 is a partial plan view along line 3-3 of FIG. 2 of a turbocharger turbine section manufactured in accordance with the present disclosure that may be utilized with the turbocharger of FIG. 2.
FIG. 4 is an enlarged cross-sectional view of the turbocharger turbine section manufactured in accordance with the present disclosure that may be utilized with the turbocharger of FIG. 2.
FIG. 5 is an enlarged cross-sectional view of an example of a nozzle section of the turbocharger turbine section manufactured in accordance with the present disclosure that may be utilized with the turbocharger of FIG. 2.
FIG 5A-C are cross-sectional views of alternative examples of a nozzle section accordingly to the present disclosure.
FIG. 6 is an enlarged cross-sectional view of an embodiment of a nozzle section of the turbocharger turbine section manufactured in accordance with the present disclosure that may be utilized with the turbocharger of FIG. 2 that belongs to the invention.

### Detailed Description of the Disclosure

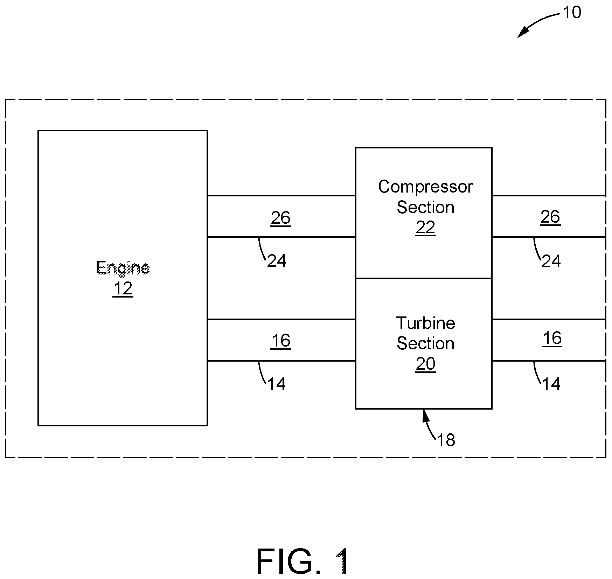

Various aspects of the disclosure will now be described with reference to the drawings, wherein like reference numbers refer to like elements, unless specified otherwise. Referring to FIG. 1, a block diagram of an exemplary engine system 10 is illustrated, according to an aspect of the disclosure. The engine system 10 may include an engine 12, which may be an internal combustion engine such as a reciprocating piston engine or a gas turbine engine, for example. According to an aspect of the disclosure, the engine 12 is a gas turbine engine, a spark ignition engine or a compression ignition engine such as a diesel engine, or other compression ignition engine 12 known in the art. The engine 12 may be used to provide power to any machine including, but not limited to, an automobile, marine vehicle, electrical generator, pump, an on-highway truck, an off-highway truck or the like. In one embodiment, the engine 12 may be used to provide power to an on-highway truck. However, engine system 10 may be associated with any industry including, but not limited to, transportation, construction, forestry, agriculture, material handling, shipping and the like.

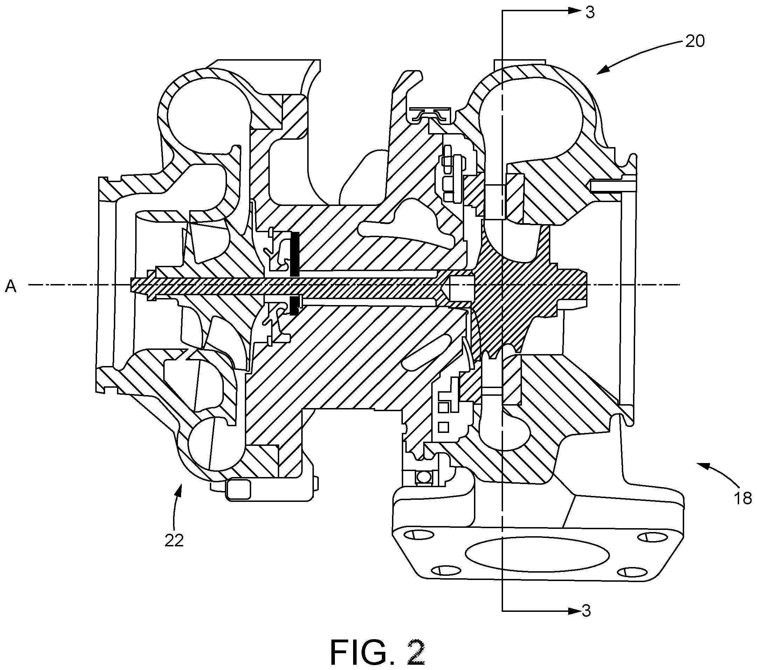

The engine system 10 may include an exhaust conduit 14 downstream of and fluidly coupled to the engine 12. The exhaust conduit 14 may be configured to transport an exhaust stream 16 away from the engine 12. The engine system 10 may also include a turbocharger that is located fluidly downstream of the engine 12. Referring now to FIGS. 1 and 2, the turbocharger 18 may include a turbine section 20 that is fluidly coupled with the exhaust conduit 14 and be configured to extract work from the exhaust stream 16. The turbocharger 18 may further include a compressor section 22 that is fluidly coupled with an inlet conduit 24 and be configured to increase the pressure of an inlet stream 26 of the engine 12. Finally, the turbocharger 18 may include an axis of rotation A about which the turbocharger 18 rotates.

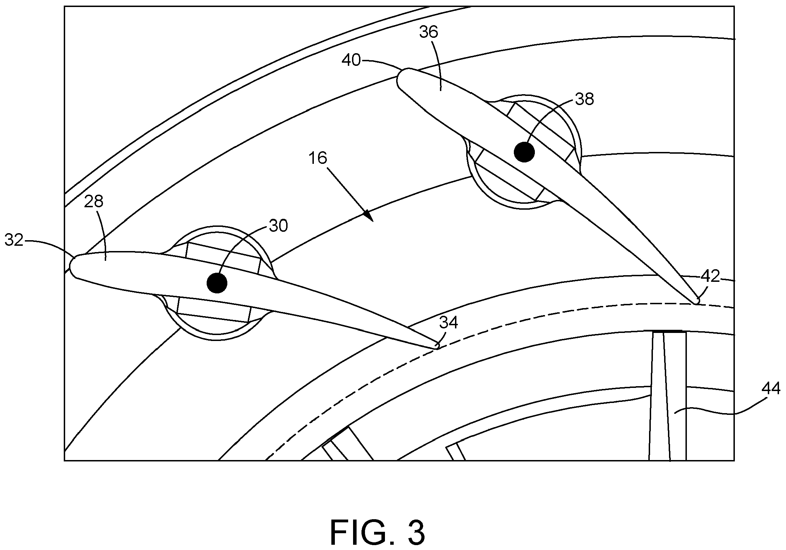

Referring now to FIG. 3, a partial plan view along line 3-3 of FIG. 2 of the turbine section 20 of the turbocharger 18 of FIG. 2 is depicted. As seen therein, the turbine section 20 may include a first swing vane 28 rotatably coupled with a first pin 30 and the first swing vane 28 may include a first leading edge 32 and a first trailing edge 34. Furthermore, the turbine section 20 may additionally include a second swing vane 36 rotatably coupled with a second pin 38 and may include a second leading edge 40 and a second trailing edge 42. Moreover, the second swing vane 36 may be positioned adjacent the first swing vane 28.

The first swing vane 28 and the second swing vane 36 may be rotatable between a closed position and an open position. In the closed position the first trailing edge 34 abuts the second leading edge 40 thereby inhibiting the passage of the exhaust stream 16 through the turbine section 20. In the open position, the first trailing edge 34 and the second trailing edge 42 may be oriented towards a turbine wheel 44 thereby allowing passage of the exhaust stream 16 through the turbine section 20 so work may be extracted from the exhaust stream 16 and transferred to the compressor section 22.

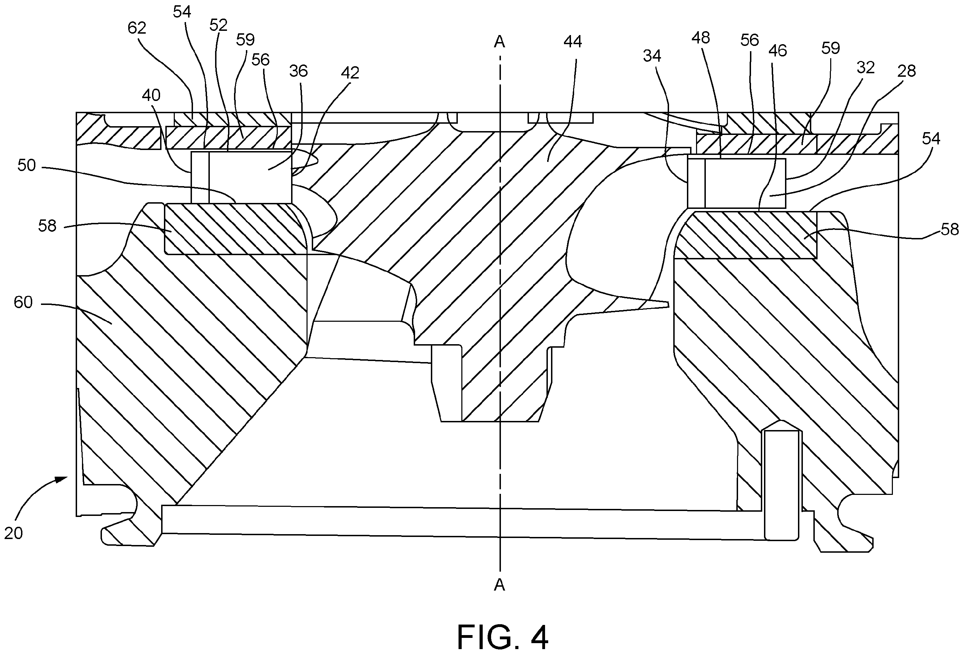

Turning now to FIG. 4, an enlarged view of the turbine section 20 of the turbocharger 18 of FIG. 2 is illustrated. As seen therein, the first swing vane 28 may include a first exhaust side edge 46 extending between the first leading edge 32 and the first trailing edge 34. Moreover, the first swing vane 28 may include a first bearing side edge 48 extending between the first leading edge 32 and the first trailing edge 34. Additionally, as seen therein, the second swing vane 36 may include a second exhaust side edge 50 extending between the second leading edge 40 and the second trailing edge 42 in addition to a second bearing side edge 52 extending between the second leading edge 40 and the second trailing edge 42. It is to be understood that although the first swing vane 28 and second swing vane 36 depicted in FIG. 4 are not positioned adjacent to each other such as in FIG. 3, the vanes in FIG. 4 have equivalent structure to the vanes in FIG. 3.

Furthermore, the turbine section 20 may include an exhaust side nozzle wall 54 and a bearing side nozzle wall 56 opposite the exhaust side nozzle wall 54. Additionally, the turbine section 20 may include a first vane ring 58 and in an example this first vane ring 58 may define the exhaust side nozzle wall 54. Furthermore, in another example the turbine section 20 may include a second vane ring 59 and this second vane ring 59 may define the bearing side nozzle wall 56. In addition, the turbine section 20 may include an exhaust housing 60. In an embodiment according to the invention the turbine section 20 lacks the first vane ring 58 and the exhaust side nozzle wall 54 is an internal surface of the exhaust housing 60. Furthermore, the turbine section 20 may include a bearing housing 62 and the bearing side nozzle wall 56 is an internal surface of the bearing housing 62.

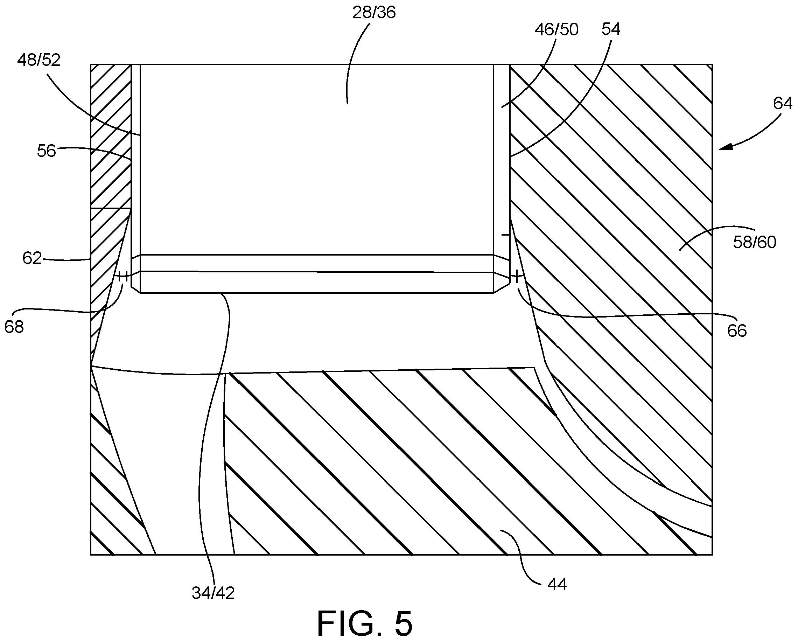

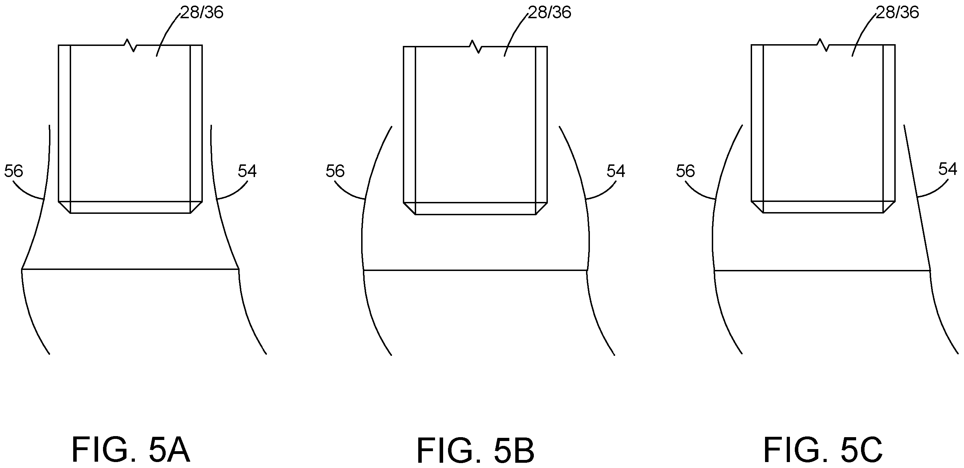

Referring now to FIG. 5, an enlarged view of a first example of a nozzle section 64 of the turbine section 20 of the turbocharger 18 of FIG. 2 is depicted which does not belong to the invention. As seen therein, while in the open position the first trailing edge 34 of the first swing vane 28 and the second trailing edge 42 of the second swing vane 36 are oriented towards the turbine wheel 44. Further, as depicted, while in this open position a portion of the exhaust side nozzle wall 54 diverges away from the first exhaust side edge 46 and second exhaust side edge 50 thereby increasing mass flowrate of the exhaust stream 16 through the turbine section 20. Further, while in the closed position, the exhaust side nozzle wall 54 is parallel with the first exhaust side edge 46 and the second exhaust side edge 50.

Additionally, the portion of the exhaust side nozzle wall 54 that diverges away from the first exhaust side edge 46 and the second exhaust side edge 50 may include a first divergence angle 66. The first divergence angle 66 may be defined as the angle between a chord coextensive with the first exhaust side edge 46 and the second exhaust side edge 50 and the portion of the exhaust side nozzle wall 54 that diverges away from this chord. In one example, the first divergence angle 66 is greater than or equal to one degree and less than or equal to eighty nine degrees. In an additional examples, the first divergence angle 66 is greater than or equal to one degree and less than or equal to sixty degrees. In a further example, the first divergence angle 66 is greater than or equal to one degree and less than or equal to forty five degrees.

As additionally depicted in FIG. 5, while in the open position a portion of the bearing side nozzle wall 56 diverges away from the first bearing side edge 48 and second bearing side edge 52 thereby increasing mass flowrate of the exhaust stream 16 through the turbine section 20. Further, while in the closed position, the bearing side nozzle wall 56 may be parallel with the first bearing side edge 48 and the second bearing side edge 52.

Additionally, the portion of the bearing side nozzle wall 56 that diverges away from the first bearing side edge 48 and the second bearing side edge 52 may include a second divergence angle 68. The second divergence angle 68 may be defined as the angle between a chord coextensive with the first bearing side edge 48 and the second bearing side edge 52 and the portion of the bearing side nozzle wall 56 that diverges away from this chord. In one example, the second divergence angle 68 is greater than or equal to one degree and less than or equal to eighty nine degrees. In an additional example, the second divergence angle 68 is greater than or equal to one degree and less than or equal to sixty degrees. In a further example, the second divergence angle 68 is greater than or equal to one degree and less than or equal to forty five degrees.

While the exhaust side nozzle wall 54 and bearing side nozzle wall 56 are shown having straight diverging walls in FIG. 5, it is to be understood that in alternative embodiments, this need not be the case. For example, FIG. 5A shows an example with convex diverging walls 54, 56; FIG. 5B shows an examples with concave diverging walls 54, 56; and FIG. 5C shows an example with one straight wall 54 and one concave wall 56. Other combinations are certainly possible. Also, the exhaust side and bearing side divergent contour(s) can exist independently, either only one divergent contour present on one side and not the other, or present on both sides but of different contour shapes. This also means they may start or stop at different radial locations, for example, so that as the vane swings open the divergent contour is exposed to one side of the vane before the other.

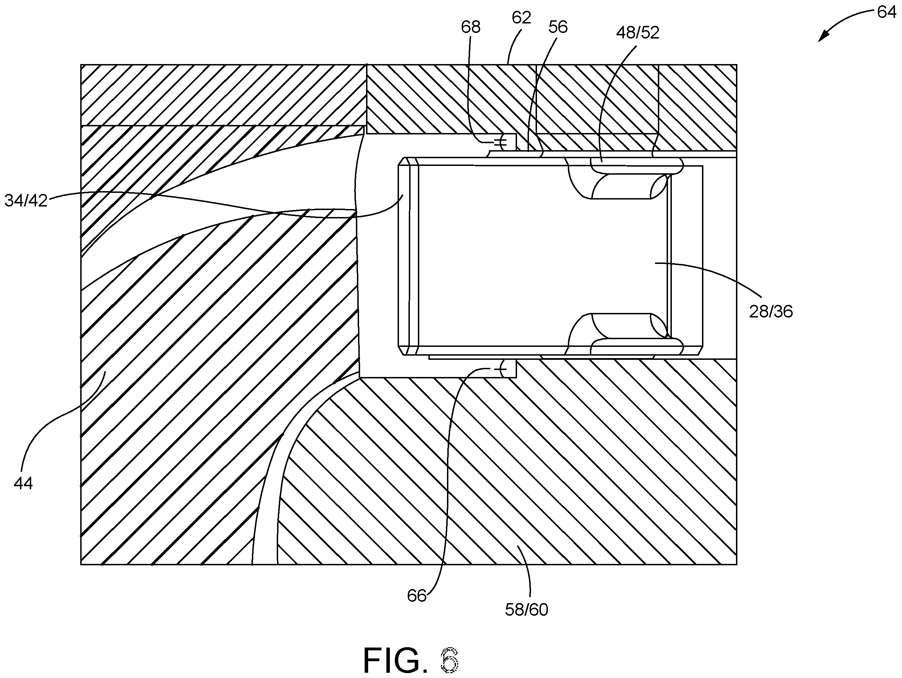

Referring now to FIG. 6, an enlarged view of an embodiment of a nozzle section 64 of the turbine section 20 of the turbocharger 18 of FIG. 2 is depicted which belongs to the invention. As seen therein, while in the open position the first trailing edge 34 of the first swing vane 28 and the second trailing edge 42 of the second swing vane 36 are oriented towards the turbine wheel 44. Further, as depicted, while in this open position a portion of the exhaust side nozzle wall 54 diverges away from the first exhaust side edge 46 and second exhaust side edge 50 thereby increasing mass flowrate of the exhaust stream 16 through the turbine section 20. Further, while in the closed position, the exhaust side nozzle wall 54 is parallel with the first exhaust side edge 46 and the second exhaust side edge 50. Additionally, the portion of the exhaust side nozzle wall 54 that diverges away from the first exhaust side edge 46 and the second exhaust side edge 50 may include a first divergence angle 66. However, as seen in this figure, rather than being generally sloped, the first divergence angle 66 in this second embodiment is equal to ninety degrees.

Furthermore, as is depicted FIG. 6 illustrating an embodiment of a nozzle section 64 of the turbine section 20 of the turbocharger 18 of FIG. 2, while in the open position a portion of the bearing side nozzle wall 56 diverges away from the first bearing side edge 48 and second bearing side edge 52 thereby increasing mass flowrate of the exhaust stream 16 through the turbine section 20. Further, while in the closed position, the bearing side nozzle wall 56 may be parallel with the first bearing side edge 48 and the second bearing side edge 52. Additionally, the portion of the bearing side nozzle wall 56 that diverges away from the first bearing side edge 48 and the second bearing side edge 52 may include a second divergence angle 68. However, as seen in this figure, rather than being generally sloped, the second divergence angle 68 in this second embodiment is equal to ninety degrees.

### Industrial Applicability

In operation, the teachings of the present disclosure can find applicability in many industrial applications, such as, but not limited to, use in an engine system 10 supplying power to an automobile, on-highway truck, an off-highway truck, marine vehicle, electric generator, pump or the like. The engine system 10 may include an engine 12, which may be an internal combustion engine such as a reciprocating piston engine or a gas turbine engine, for example. The engine 12 may be used to provide power to any machine including, but not limited to, an automobile, marine vehicle, electrical generator, pump, an on-highway truck, an off-highway truck or the like. In one embodiment, the engine 12 may be used to provide power to an on-highway truck. However, engine system 10 may be associated with any industry including, but not limited to, transportation, construction, forestry, agriculture, material handling, shipping and the like.

Further, the engine system 10 may include a turbocharger 18 including a turbine section 20. The turbine section 20 may utilize a nozzle section 64 including an exhaust side nozzle wall 54 that diverges away from the first exhaust side edge 46 of a first swing vane 28 and a second exhaust side edge 50 of second swing vane 36 positioned adjacent to the first swing vane 28. Moreover, the nozzle section 64 may additionally include a bearing side nozzle wall 56 that diverges away from a first bearing side edge 48 of the first swing vane 28 and a second bearing side edge 52 of the second swing vane 36 positioned adjacent to the first swing vane 28. The portions of the exhaust side nozzle wall 54 and bearing side nozzle wall 56 that diverge may be placed anywhere between a first pin 30, or a second pin 38, and the outer circumference of a turbine wheel 44. Furthermore, a first divergence angle 66 and a second divergence angle 68 of the present disclosure may be ninety degrees.

The above description is meant to be representative only, and thus modifications may be made to the embodiments described herein without departing from the scope of the claims.

## Claims

1. A turbocharger turbine section (20) for a radial inflow turbine, comprising:
a first swing vane (28) rotatably coupled with a first pin (30), the first swing vane (28) including a first leading edge (32), a first trailing edge (34), a first exhaust side edge (46) extending between the first leading edge (32) and the first trailing edge (34) and a first bearing side edge (48) extending between the first leading edge (32) and the first trailing edge (34);
a second swing vane (36) rotatably coupled with a second pin (38), the second swing vane (36) positioned adjacent the first swing vane (28) and including a second leading edge (40), a second trailing edge (42), a second exhaust side edge (50) extending between the second leading edge (40) and the second trailing edge (42) and a second bearing side edge (52) extending between the second leading edge (40) and the second trailing edge (42);
an exhaust side nozzle wall (54);
a bearing side nozzle wall (56) opposite the exhaust side nozzle wall (54); and
a turbine wheel (44);
**characterized in that** the first swing vane (28) and the second swing vane (36) are rotatable between a closed position wherein the first trailing edge (34) abuts the second leading edge (40) and an open position wherein the first trailing edge (34) and the second trailing edge (42) are oriented towards the turbine wheel (44), wherein while in the closed position the exhaust side nozzle wall (54) is parallel with the first exhaust side edge (46) and the second exhaust side edge (50), wherein while in the closed position the bearing side nozzle wall (56) is parallel with the first bearing side edge (48) and the second bearing side edge (52), wherein while in the open position a portion of the exhaust side nozzle wall (54) diverges away from both the first exhaust side edge (46) and the second exhaust side edge (50) and wherein while in the open position a portion of the bearing side nozzle wall (56) diverges away from the first bearing side edge (48) and the second bearing side edge (52); and
**in that** the portion of the exhaust side nozzle wall (54) that diverges away from the first exhaust side edge (46) and the second exhaust side edge (50) further includes a first divergence angle (66) and further wherein the first divergence angle (66) is equal to 90 degrees, wherein the exhaust side nozzle wall (54) is an internal surface of an exhaust housing (60), wherein the portion of the bearing side nozzle wall (56) that diverges away from the first bearing side edge (48) and the second bearing side edge (52) further includes a second divergence angle (68), wherein the second divergence angle (68) is equal to 90 degrees and wherein the bearing side nozzle wall (56) is an internal surface of a bearing housing (62).

2. An engine system, comprising:
an engine (12);
an exhaust conduit (14) downstream of and fluidly coupled with the engine (12) configured to transport an exhaust stream (16) away from the engine (12); and
a turbocharger (18);
**characterized by** a turbine section (20) according to claim 1, the turbine section (20) fluidly coupled with the exhaust conduit (14) and configured to extract work from the exhaust stream (16).

## Patentansprüche

1. Turbolader-Turbinenabschnitt (20) für eine Turbine mit radialer Einströmung, umfassend:
eine erste Schwenkschaufel (28), drehbar mit einem ersten Stift (30) gekoppelt, wobei die erste Schwenkschaufel (28) eine erste Vorderkante (32), eine erste Hinterkante (34), eine erste auslassseitige Kante (46), die sich zwischen der ersten Vorderkante (32) und der ersten Hinterkante (34) erstreckt, und eine erste lagerseitige Kante (48), die sich zwischen der ersten Vorderkante (32) und der ersten Hinterkante (34) erstreckt, beinhaltet;
eine zweite Schwenkschaufel (36), drehbar mit einem zweiten Stift (38) gekoppelt, wobei die zweite Schwenkschaufel (36) benachbart zur ersten Schwenkschaufel (28) positioniert ist und eine zweite Vorderkante (40), eine zweite Hinterkante (42), eine zweite auslassseitige Kante (50), die sich zwischen der zweiten Vorderkante (40) und der zweiten Hinterkante (42) erstreckt, und eine zweite lagerseitige Kante (52), die sich zwischen der zweiten Vorderkante (40) und der zweiten Hinterkante (42) erstreckt, beinhaltet;
eine auslassseitige Düsenwand (54);
eine lagerseitige Düsenwand (56) gegenüber der auslassseitigen Düsenwand (54); und
ein Turbinenrad (44);
**dadurch gekennzeichnet, dass** die erste Schwenkschaufel (28) und die zweite Schwenkschaufel (36) zwischen einer geschlossenen Position, in der die erste Hinterkante (34) an der zweiten Vorderkante (40) anliegt, und einer offenen Position, in der die erste Hinterkante (34) und die zweite Hinterkante (42) in Richtung des Turbinenrads (44) ausgerichtet sind, drehbar sind, wobei, in der geschlossenen Position, die auslassseitige Düsenwand (54) parallel mit der ersten auslassseitigen Kante (46) und der zweiten auslassseitigen Kante (50) ist, wobei, in der geschlossenen Position, die lagerseitige Düsenwand (56) parallel mit der ersten lagerseitigen Kante (48) und der zweiten lagerseitigen Kante (52) ist, wobei, in der offenen Position, ein Teil der auslassseitigen Düsenwand (54) sich sowohl von der ersten abgasseitigen Kante (46) als auch von der zweiten auslassseitigen Kante (50) entfernt, und wobei, in der offenen Position, ein Teil der lagerseitigen Düsenwand (56) sich von der ersten lagerseitigen Kante (48) und der zweiten lagerseitigen Kante (52) entfernt; und
dadurch, dass der Teil der auslassseitigen Düsenwand (54), der sich von der ersten auslassseitigen Kante (46) und der zweiten auslassseitigen Kante (50) entfernt, ferner einen ersten Divergenzwinkel (66) beinhaltet und wobei ferner der erste Divergenzwinkel (66) gleich 90 Grad ist, wobei die auslassseitige Düsenwand (54) eine innere Oberfläche eines Auslassgehäuses (60) ist, wobei der Teil der lagerseitigen Düsenwand (56), der sich von der ersten lagerseitigen Kante (48) und der zweiten lagerseitigen Kante (52) entfernt, ferner einen zweiten Divergenzwinkel (68) beinhaltet, wobei der zweite Divergenzwinkel (68) gleich 90 Grad ist und wobei die lagerseitige Düsenwand (56) eine innere Oberfläche eines Lagergehäuses (62) ist.

2. Kraftmaschinensystem, umfassend:
eine Kraftmaschine (12);
eine Auslassleitung (14), stromabwärts von und fluidisch gekoppelt mit der Kraftmaschine (12), ausgelegt zum Transportieren eines Auslassstroms (16) weg von der Kraftmaschine (12); und
einen Turbolader (18);
**gekennzeichnet durch** einen Turbinenabschnitt (20) nach Anspruch 1, wobei der Turbinenabschnitt (20) fluidisch mit der Auslassleitung (14) gekoppelt ist und ausgelegt ist zum Extrahieren von Arbeit aus dem Auslassstrom (16).

## Revendications

1. Section turbine de turbo-compresseur (20) pour une turbine à flux radial, comprenant :
une première aube pivotante (28) accouplée de manière rotative avec un premier axe (30), cette première aube pivotante (28) incluent un premier bord d'attaque (32), un premier bord de fuite (34), un premier bord côté échappement (46) s'étendant entre le premier bord d'attaque (32) et le premier bord de fuite (34) et un premier bord côté palier (48) s'étendant entre le premier bord d'attaque (32) et le premier bord de fuite (34) ;
une deuxième aube pivotante (36) accouplée de manière rotative avec un deuxième axe (38), cette deuxième aube pivotante (36) étant positionnée de façon adjacente à la première aube pivotante (28) et incluent un deuxième bord d'attaque (40), un deuxième bord de fuite (42), un deuxième bord côté échappement (50) s'étendant entre le deuxième bord d'attaque (40) et le deuxième bord de fuite (42) et un deuxième bord côté palier (52) s'étendant entre le deuxième bord d'attaque (40) et le deuxième bord de fuite (42) ;
une paroi de buse côté échappement (54) ;
une paroi de buse côté palier (56) en face de la paroi de buse côté palier (54) ; et
une roue de turbine (44) ;
**caractérisée en ce que** la première aube pivotante (28) et la deuxième aube pivotante (36) peuvent tourner entre une position fermée dans laquelle le premier bord de fuite (34) est contigu au deuxième bord d'attaque (40) et une position ouverte dans laquelle le premier bord de fuite (34) et le deuxième bord de fuite (42) sont orientés vers la roue de turbine (44), dans laquelle, lorsque dans la position fermée, la paroi de buse côté échappement (54) est parallèle avec le premier bord côté échappement (46) et le deuxième bord côté échappement (50), dans laquelle, dans la position fermée, la paroi de buse côté palier (56) est parallèle avec le premier bord côté palier (48) et le deuxième bord côté palier (52), dans laquelle, lorsque dans la position ouverte, une partie de la paroi de buse côté échappement (54) diverge à la fois du premier bord côté échappement (46) et du deuxième bord côté échappement (50), et dans laquelle, lorsque dans la position ouverte, une partie de la paroi de buse côté palier (56) diverge du premier bord côté palier (48) et du deuxième bord côté palier (52) ; et
**caractérisée en ce que** la partie de la paroi de buse côté échappement (54) qui diverge du premier bord côté échappement (46) et du deuxième bord côté échappement (50) inclut en outre un premier angle de divergence (66) et en outre dans laquelle ce premier angle de divergence (66) est égal à 90 degrés, dans laquelle la paroi de buse côté échappement (54) est une surface interne d'un carter d'échappement (60), dans laquelle la partie de la paroi de buse côté palier (56) qui diverge du premier bord côté palier (48) et du deuxième bord côté palier (52) inclut en outre un deuxième angle de divergence (68), ce deuxième angle de divergence (68) étant égal à 90 degrés et dans laquelle la paroi de buse côté palier (56) est une surface interne d'un corps de palier (62).

2. Système de moteur, comprenant :
un moteur (12) ;
un conduit d'échappement (14) en aval et relié de manière fluidique au moteur (12), configuré de façon à transporter un flux d'échappement (16) pour l'éloigner du moteur (12) ; et
un turbo-compresseur (18) ;
**caractérisé par** une section turbine (20) selon la revendication 1, cette section turbine (20) étant reliée de manière fluidique au conduit d'échappement (14) et étant configurée de façon à extraire du travail du flux d'échappement (16).
